Europäisches Patentamt

European Patent Office

Office européen des brevets

(11) Publication number: **0 174 582 B1**

# EUROPEAN PATENT SPECIFICATION

(45) Date of publication of patent specification: **27.03.91**    (51) Int. Cl.⁵: **B60H 1/24**

(21) Application number: **85111070.0**

(22) Date of filing: **03.09.85**

(54) Ventilation device for motor vehicles.

(30) Priority: **11.09.84 IT 6790084**

(43) Date of publication of application:
**19.03.86 Bulletin 86/12**

(45) Publication of the grant of the patent:
**27.03.91 Bulletin 91/13**

(84) Designated Contracting States:
**DE FR GB SE**

(56) References cited:
**DE-A- 2 012 000**
**DE-B- 1 580 689**
**FR-A- 2 470 701**
**FR-A- 2 470 702**
**FR-A- 2 531 913**

(73) Proprietor: **FOGGINI PROGETTI S.r.l.**
**Via Aosta, 17**
**I-10092 Beinasco Torino(IT)**

(72) Inventor: **Foggini, Paolo**
**Strada Moncalieri 2**
**I-10020 Revigliasco Torinese Torino(IT)**

(74) Representative: **Modiano, Guido et al**
**MODIANO, JOSIF, PISANTY & STAUB**
**Modiano & Associati Via Meravigli, 16**
**I-20123 Milano(IT)**

Rank Xerox (UK) Business Services

## Description

This invention relates to a ventilation device for motor vehicles, commonly referred to as air vents or ventilators, installable in the dashboard and/or central console where the speed gear selector lever is situated, or at the ends of specially provided channels for directing ventilation air to the rear passengers, of the type defined in the pre-characterizing part of claim 1 and as disclosed for example in FR-A-2 531 913.

Air vents or ventilator devices are usually equipped, in a known manner, with flow directing means generally comprising two arrays of oscillable vanes mounted about mutually orthogonal axes and flow shut-off and throttling members.

At present, both the flow directing vanes and shut-off and throttling members are controlled directly by means of knobs which protrude from the ventilator bezel. The connection of each knob to its respective vane array and to the shut-off and throttling member is sometimes direct (see e.g. FR-A-2 531 913), but more often for reasons of space and/or positioning the aforesaid members, between each knob and the member controlled thereby there is interposed a kinematic deflector train (see e.g. DE-A-2 012 000). This complicates the ventilator construction with adverse effects from both the standpoint of costs and of reliability in operation. But the most important drawback is that direct adjustment may be inconvenient, and occasionally altogether impossible, such as when the only occupant of a car is the driver and the air vent's are located at the ends of the dashboard, thereby the ventilator located at the passenger side of the vehicle is out of the driver's reach.

Accordingly, it is an aim of the present invention to obviate such drawbacks by providing a ventilation device which permits centralization of the air flow direction controls and the air flow throttling controls of all the ventilators installed in the passenger compartment.

Within this broad aim, it is an object of the invention to further provide a ventilation device which is simple, highly reliable in operation, and appropriate for fine adjustment of both the direction and rate of air flow.

This aim, as well as this and other objects which will become apparant hereinafter, are achieved by a ventilation device as defined in appended claim 1.

Further features and advantages of the invention will be apparent from the following detailed description with reference to the accompanying illustrative and not limitative drawings, wherein:

Figure 1 is a partly sectional perspective view of a pair of ventilator devices located on the dashboard of a motor vehicle, and of the centralized switch cluster;

Figure 2 is an exploded perspective view showing the construction of the electromechanical control means and their related connection to the centralized switch cluster;

Figure 3 is a front elevation view of the centralized switch cluster in a modified construction embodiment;

Figure 4 is a sectional view taken along the line IV-IV of Figure 3; and

Figure 5 is a sectional view taken along the line V-V of Figure 3.

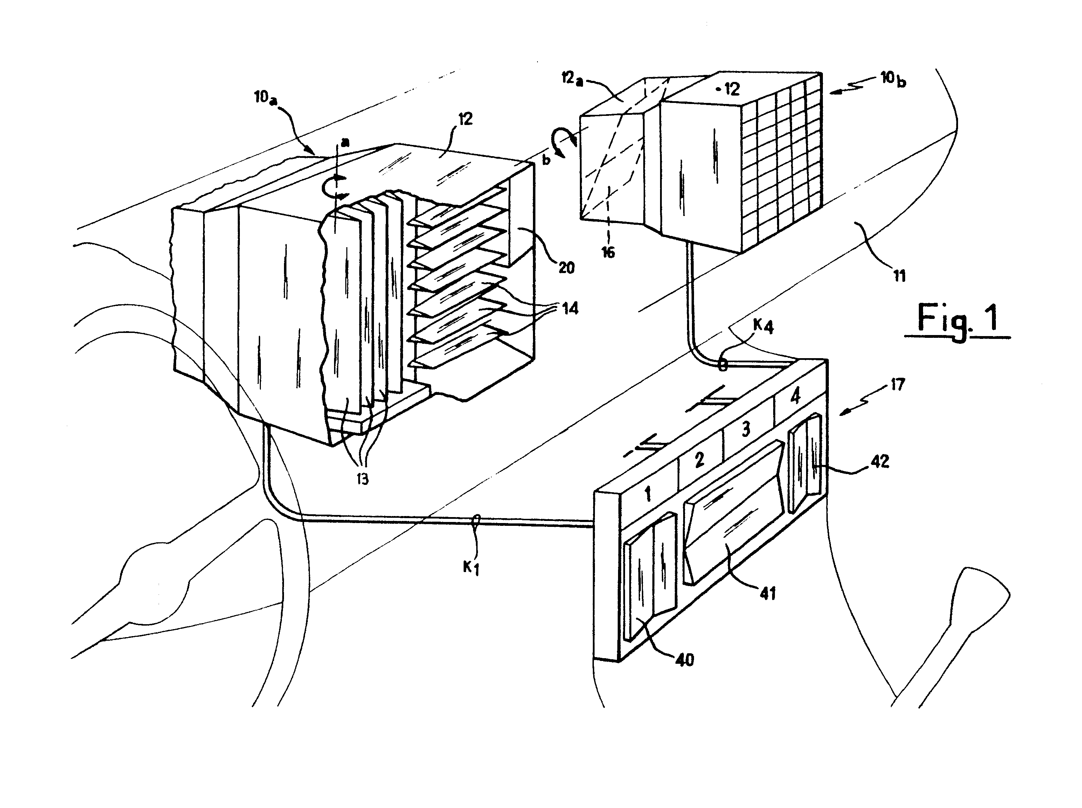

With reference to Figures 1 and 2, 10a and 10b designate ventilator means comprising for example, two ventilation air supply devices located centrally and at the ends of the dashboard 11 of a generic motor vehicle in a usual manner, at the inlet end of the vehicle's air vents. Each device, commonly referred to as ventilator, is formed of a small box-like body 12, of generally parallelepipedon profile, wherein there are contained two sequentially arranged arrays of adjustable foils or vanes 13-14 pivotably mounted for reciprocal movement about mutually orthogonal axes s-b; the vanes 13 are adapted for controlling the direction of a flow of air passing through the ventilator in a horizontal plane, said vanes 13 define a length dimension substantially corresponding to an internal height dimension defined by said box-like body 12, and are conventionally journalled at their extremities to the upper and lower internal faces thereof. The vanes 14 are adapted for controlling a flow of air passing through the ventilator in a vertical plane. Said vanes 14 define a length dimen sion substantially corresponding to an internal width dimension defined by said box-like body 12, and are conventionally journalled at their extremities to the lateral internal faces thereof. The vanes, in each array are interconnected, through hinge connections 13a provided substantially at the ends of rearwardly projecting protuberances 13b, by a corresponding rod 15 extending transverse to the longitudinal extension of the vanes and which, so-linked, may be displaced to provide consistent and simultaneous movement of all the vanes making up each array. On the bottom of the small box-like body 12 there is provided an extension 12a to which the ventilation (cold and/or warm) air supply channel is connected and in which there is provided an oscillatable throttling valve 16 for throttling and shutting off the delivery of said air.

Advantageously, one vain in each of said arrays of vains is provided at an end thereof with an engageable shaft or pin 13c adapted for co-operative keyed fit relationship with electromechanical means, as will be described hereinafter.

Of course, the device does not compulsorily avail itself of a parallelepipedon profile and could have a different shape, e.g. a cylindrical shape, and be provided with a single pair of eave vanes adjustable in mutually orthogonal planes.

According to this invention, control of the vane arrays 13-14 and of the throttling valve or vane 16 is centralized, it being implementable as a cluster of switches generally indicated at 17, which may be advantageously housed on the dashboard at an easily and conveniently accessible location for the vehicle's driver and/or the front passenger and also the rear passengers if located rearwardly on the known central console where the speed gear selector lever is frequently situated. For this purpose, the vane array 13-14 and valve or vain 16 of each supply device are subjected to the action of a corresponding electromechanical control means, generally indicated at 20.

In a preferred embodiment of the invention, the electromechanical means include a gear wheel keyed to the shaft of the respective member to be controlled (valve or vane in each array) wherewith there cooperate a pair of diametrically opposed ratchet mechanisms each of which is subjected to a corresponding control electromagnet which, upon selective energization through the corresponding centralized switch, will cause the stepwise rotation in opposite directions of said gear wheel.

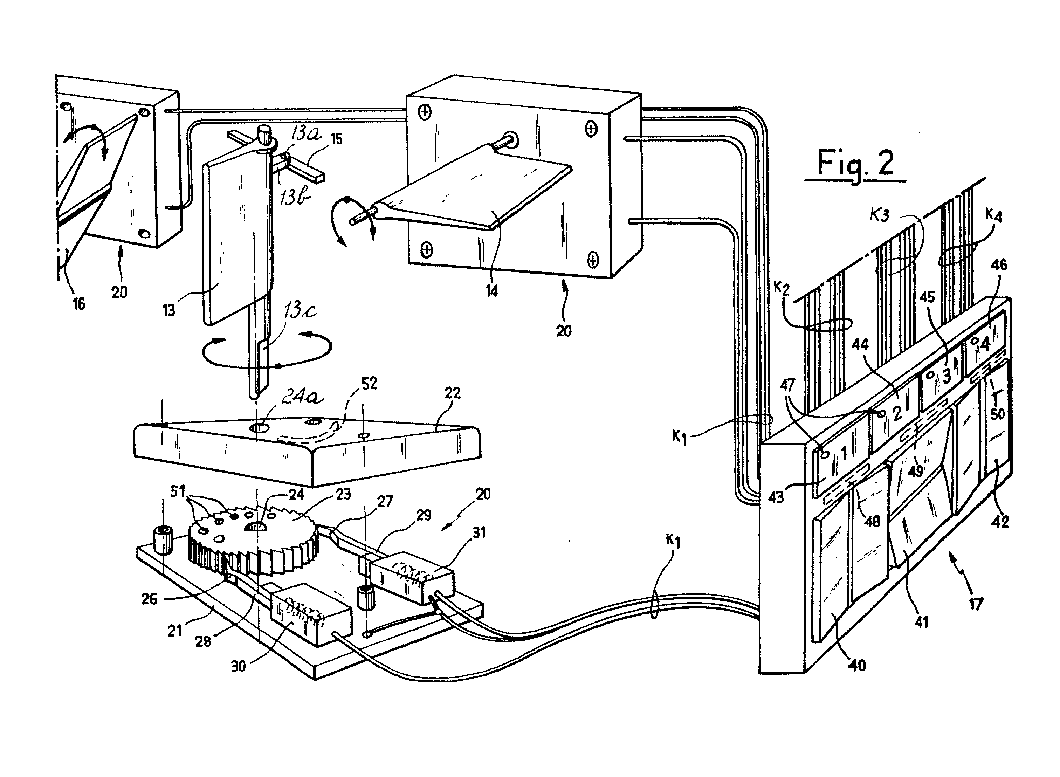

The electromechanical means 20, which are identical to one another, are, of preference, as shown detailedly in Figure 2; the structure shown and described hereinafter being selected for reasons of low electric absorption of the medium, and for reasons of space requirements and necessary reliability in operation.

For that purpose, each electromechanical means 20 comprises a container having a base 21 and a removable cover 22 connected to the base by screws. On the base 21 there is carried a rotatably mounted ratchet gear wheel 23 having, at a substantially central portion thereof, a profiled seat 24 adapted for accommodating, in keyed fit relationship therewith, the pin or shaft of the throttling valve 16 or said engageable pin 13c of a generic vane in the related array 13-14; which pin has a corresponding profile to prevent any mutual rotational movement occuring between the pin 13c and the seat 24; the movement of the generic vane subjected to the control means being transferred consistently to the remaining vanes in the array through the related rod 15.

Obviously, the container 21, 22 of the electromechanical means, may be mounted on a vehicle, adjacently to, but independently of the box-like body 12 of the ventilator device; through holes 24a being provided in the same to allow the pins associated with the valve 16 or the vanes 13,14, to be passed therethrough. Alternatively, the container 21,22 may be fixed to the box-like body 12 by any suitable fixing means, such as rivets, screws etc., depending upon contingent assembly and installation requirements.

With the gear wheel 23 there cooperate articulated ratchet pawls 26-27 which selectively engage with the wheel teeth at diametrically opposed locations so that said teeth are selectively operative to produce corresponding angular displacements of the wheel in opposite directions.

The ratchet pawls 26-27 are articulated to the ends of stems 28-29 fast with the armature of corresponding control electromagnets 30-31 carried on the base 21 and being energized selectively through the centralized switch cluster 17.

The cluster of centralized switches are provided with toggle change-over switches for controlling the electromechanical members and a set of keys for controlling corresponding bistable switches for the selection of the different supply devices to be adjusted.

In an advantageous embodiment of the invention, the cluster 17 comprises three toggle change-over switches 40-41-42 arranged as shown in Figure 1, the middle switch 41 being adapted for controlling movement of the valve 16 to open and close or partially throttle a respective vent, and the laterally disposed switches being adapted for controlling movement of the cited vane arrays 13-14. Each change-over switch has a stable open central position and two operative positions, respectively right and left ones, or up and down ones, into which it can be moved against the bias of elastic means.

Above the change-over switches there is the push-button row of bistable switches 43-44-45-46 serving to select the supply devices such as 10a-10b etc., which are to be adjusted, and hence, the number of bistable switches corresponding to the number of supply devices installed in the vehicle. The aforesaid switches selectively connect the wiring of the corresponding device to the centralized cluster 17. It may be appreciated that, from the electric standpoint, the wirings K1...K4 of the various supply devices such as 10a-10b etc. are advantageously in parallel with one another and are connected to the centralized cluster 17 by closing the related normally open switch 43 to 46. This circuit arrangement is advantageous because it enables simultaneous adjustment of two or more supply devices, e.g. to the effect of flow throttling. Of course, it would also be possible to actuate the switches 43a to 46 by means of a selective keyboard known per se, wherein closing of a key results in any already closed one being opened.

Each switch may be provided with a light indicator (Led) 47 to indicate its activated or deactivated states. It is also advantageous that the bezel of the cluster 17 be provided with light indication strips 48-49-50 formed of a plurality of light sources (Leds) which are turned on sequentially to indicate the position assumed by the remote-controlled members (vanes and shut-off valve).

These light sources may be energized by movable contacts 51 carried on the ratchet wheel 23 of each control means which are progressively brought to contact a track 52 carried on the cover 22; said track forming the fixed contact.

The toggle switches 40-41-42 activate a conventional pulse generator which -- through a power interface including, for example, a transistor with switching functions -- energizes correspondingly with pulses the electromagnet 30 or 31 selected by the change-over switch itself. For each working position, each change-over switch will cause, therefore, closing of the pulse generator circuit and closing of the circuit which selects the electromagnet for which the pulses are intended.

The pulse generator and related interface are preferably housed in the centralized cluster 17 on a printed circuit board (in a known manner, and not shown for reasons of clarity).

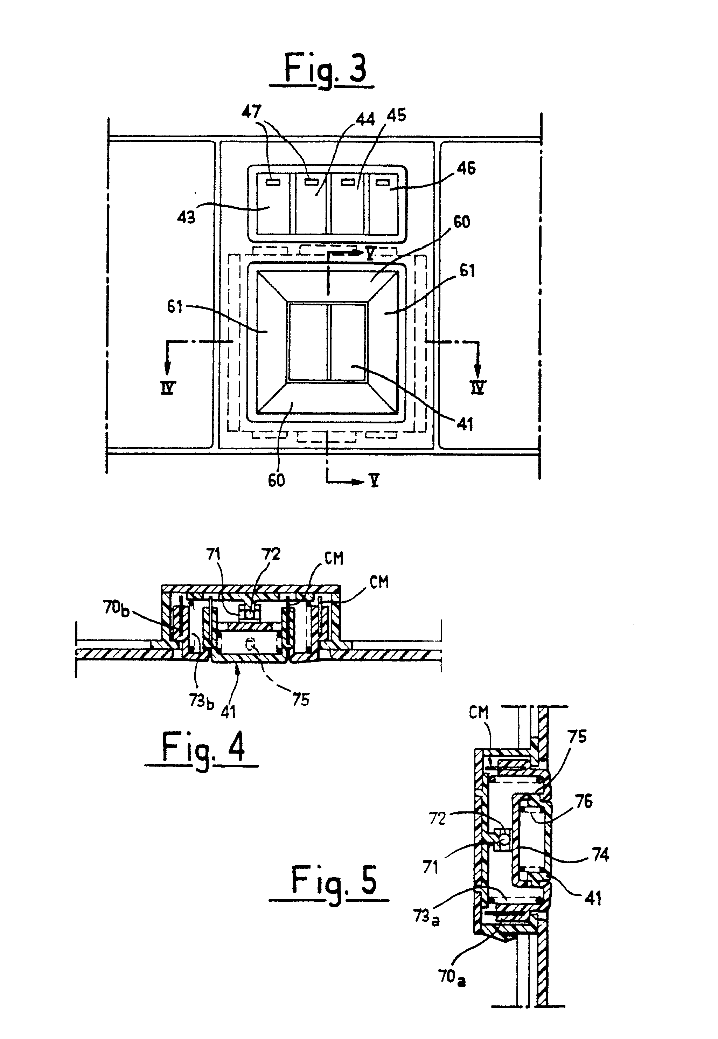

The modified embodiment of Figure 3 relates to a different construction arrangement of the centralized switch cluster 17, tending to decrease its space requirements and improve the operating functionality thereof.

In that embodiment, the cluster 17 comprises a central change-over toggle switch 41 surrounded along four sides by change-over switches 60-61 adapted for oscillation in the vertical and horizontal directions, as well as the series of the bistable selector switches 43 to 46. The change-over switch 41 is used to control the shut-off and throttling valve 16, whereas the change-over switches 61 and 60 are used to control the array of vertical vanes 13 and horizontal vanes 14, respectively.

The change-over switches 60-61, hereinafter referred to as vertical and horizontal, comprise small frames 70a-70b tilting around corresponding pins 71-72 against the force of bias springs such as 73a-73b. On the small frame 70a of the vertical change-over switch there is formed a U-like seat 74 containing the central change-over switch 41 tilting around pins 75 of the seat against the force of a spring 76. The ends of the small frames 70a-70b and central change-over switch 41 are provided with movable electric contacts CM intended for engagement with corresponding fixed contacts of the centralized cluster board.

Of course, within the inventive principle, the constructional details and embodiments may vary,

In particular, where the overall dimensions allow, the electromechanical control means 20 including the electromagnets 30-31 may be replaced with continuous actuators equipped with reversible polarity motors having reduction gears which, through appropriate deflectors preferably of the warm and gear type, drive, with faculty for rotation in opposite directions, a gear wheel such as 23 keyed to the pin of the member to be adjusted.

Where technical features mentioned in any claim are followed by reference signs, those reference signs have been included for the sole purpose of increasing the intellegibility of the claims and accordingly such reference signs do not have any limiting effect on the scope of each element identified by way of example by such reference signs.

## Claims

1. A ventilation device for motor vehicles, including ventilator means (10a, 10b) comprising air flow throttling means (16) and air flow direction control members (13, 14), characterized by electro-mechanical control means (20-24, 26-31) controlling said air flow throttling means (16) and air flow direction control members (13, 14) and by a cluster of centralized switches (17, 40-46, 60, 61) for at least selectively actuating said electromechanical control means (20-24, 26-31).

2. A ventilation device according to claim 1, wherein said air flow throttling means and said air flow direction control members comprise angularly displaceable vanes (13, 14, 16) operatively associated with a shaft (13a), characterized in that said electromechanical control means include a gear wheel (23) keyed to the shaft of the related vane (13, 14, 16) to be controlled, and a pair of diametrically opposed ratchet mechanisms (26, 27) cooperating with said gear wheel (23), each said ratchet mechanism (26, 27) being subjected to a corresponding control electromagnet (30, 31) which, upon being selectively energized by a corresponding centralized switch (17), caused said gear wheel (23) to rotate step-wise in opposite directions.

3. A ventilation device according to the preceding claims, characterized in that the centralized switch cluster (17) include change-over toggle switches (40-42) for controlling the electromechanical members (20-24, 26-31 ) and a series of keys for controlling corresponding bistable switches (43-46) and for selecting the different supply devices (10a,10b) to be adjusted.

4. A ventilation device according to Claims 1 to 3, characterized in that each switch-over toggle switch (40-42) activates a pulse generator which correspondingly energizes pulse-wise the control electromagnet (30,31) selected by the change-over switch (40-42) itself.

5. A ventilation device according to Claim 1, characterized in that said electromechanical control means (20-24,26-31) are of a continuous type and comprise a reversible polarity motor and reduction gear for driving the gear wheel keyed to the shaft (13c) of the member (13,14,16) to be controlled.

6. A ventilation device according to Claim 1,2, or 5, characterized in that said electromechanical control means (20-24,26-31) acts on a pin associated with a vane (13,14) which consistently transfers movement to other vanes (13,14) through a mutual connection rod (15).

7. A ventilation device according to the preceding claims, characterized in that the centralized switch cluster (17) comprises three change-over toggle switches (40-42) each of which controls in opposite directions a corresponding electromagnetic control means (30,31) for controlling the throttling valve (16) and respectively controlling the vertical and horizontal directing vanes (13,14).

8. A ventilation device according to Claims 1 to 5, characterized in that the centralized switch cluster (17) comprises a central change-over toggle switch (41) flanked by pairs of change-over toggle switches (60,61) set for oscillation in the vertical, respectively horizontal, direction for the corresponding vertical and horizontal control of the flow direction.

9. A ventilation device according to Claim 8, characterized in that horizontal and vertical tilting change-over toggle switches (60,61) comprise small frames (70a,70b) set for oscillation around mutually orthogonal pins (71,72), and wherein the small frame (70a,70b) of the horizontal change-over switch comprises a central seat (74) with a pivot pin (75) for the central change-over toggle switch (41).

10. A ventilation device according to the preceding claims, characterized in that the centralized switch cluster (17,40-46,60,61) can be changed over through said selector keys to differentiated supply devices (10a,10b).

11. A ventilation device according to any of the preceding claims, characterized in that an optical means (47-50) is provided to display the positions of the controlled members (13,14,16).

12. A ventilation device according to Claim 11, characterized in that said optical means (47-50) comprises light indicators (47) for displaying the condition of the selector keys and strips of light (48-50) sources sequentially turned on to display the positions of the controlled members (13,14,16).

## Revendications

1. Dispositif de ventilation pour véhicules à moteur, comportant des moyens ventilateurs (10a, 10b) comprenant des moyens d'étranglement (16) de l'écoulement de l'air et des éléments de commande (13, 14) de la direction de l'écoulement de l'air, caractérisé par des moyens de commande électromécaniques (20-24, 26-31) qui commandent lesdits moyens d'étranglement (16) de l'écoulement de l'air et lesdits éléments de commande (13, 14) de la direction de l'écoulement de l'air et par un groupe de commutateurs centralisés (17, 40-46, 60, 61) pour actionner au moins de façon sélective lesdits moyens de commande électromécaniques (20-24, 26-31).

2. Dispositif de ventilation selon la revendication 1, dans lequel lesdits moyens d'étranglement de l'écoulement de l'air et lesdits éléments de commande de la direction de l'écoulement de l'air, comprennent des ailettes pouvant être déplacées dans une direction angulaire (13, 14, 16) associées en fonctionnement à un arbre (13a), caractérisé en ce que lesdits moyens de commande électromécaniques comprennent une roue dentée (23) calée sur l'arbre de l'ailette correspondante (13, 14, 16) devant être commandée, et une paire de mécanismes à cliquets diamétralement opposés (26, 27) qui coopèrent avec ladite roue dentée (23), chacun desdits mécanismes à cliquets (26, 27) étant soumis à un électro-aimant de commande (30, 31) correspondant, qui lorsqu'il est excité de façon sélective par un commutateur centralisé correspondant (17), entraîne la rotation pas à pas de ladite roue dentée (23) dans des directions opposées.

3. Dispositif de ventilation suivant les revendications précédentes, caractérisé en ce que le groupe de commutateurs centralisés (17) comporte des commutateurs inverseurs à bascule (40-42) pour commander les éléments électromécaniques (20-24, 26-31) et une série de clefs pour commander des commutateurs bi-stables correspondants (43-46) et pour sélectionner les différents dispositifs d'alimentation (10a, 10b) devant être réglés.

4. Dispositif de ventilation selon les revendications 1 à 3, caractérisé en ce que chaque commutateur inverseur à bascule (40-42) actionne un générateur à impulsions qui excite de façon pulsée correspondante l'électro-aimant de commande (30, 31) sélectionné par le commutateur inverseur (40-42) lui-même.

5. Dispositif de ventilation selon la revendication 1, caractérisé en ce que lesdits moyens de commande électromécaniques (20-24, 26-31) sont du type continu et comportent un moteur à polarité réversible et un engrenage réducteur pour entraîner la roue dentée calée sur l'arbre (13c) de l'élément (13, 14, 16) devant être commandé.

6. Dispositif de ventilation selon les revendications 1, 2 ou 5, caractérisé en ce que lesdits moyens de commande électromécaniques (20-24, 26-31) actionnent un ergot associé à une ailette (13, 14) qui transfère de façon conforme le mouvement à d'autres ailettes (13, 14) par l'intermédiaire d'une tige de liaison mutuelle (15).

7. Dispositif de ventilation selon les revendications précédentes, caractérisé en ce que le groupe de commutateurs centralisés (17) comporte trois commutateurs inverseurs à bascule (40-42) chacun d'eux commandant dans des directions opposées un moyen de commande électromagnétique correspondant (30, 31) pour commander la vanne d'étranglement (16) et respectivement les ailettes de direction verticale et horizontale (13, 14).

8. Dispositif de ventilation selon les revendications 1 à 5, caractérisé en ce que le groupe de commutateurs centralisés (17) comporte un commutateur inverseur à bascule central (41) entouré par des paires de commutateurs inverseurs à bascule (60, 61), réglés en vue de l'oscillation dans une direction verticale, respectivement horizontale, afin de commander de façon correspondante dans une direction verticale et horizontale l'écoulement de l'air.

9. Dispositif de ventilation selon la revendication 8, caractérisé en ce que les commutateurs inverseurs à bascule oscillants horizontal et vertical (60, 61) comportent de petits châssis (70a, 70b) montés pour osciller autour de pivots d'articulation (71, 72) perpendiculaires l'un à l'autre, et dans lequel le petit châssis (70a, 70b) du commutateur inverseur horizontal comporte un siège central (74) muni d'un pivot d'articulation (75) destiné au commutateur inverseur à bascule central (41).

10. Dispositif de ventilation selon les revendications précédentes, caractérisé en ce que le groupe de commutateurs centralisés (17, 40-46, 60, 61) peut être commuté au moyen desdites clefs de sélection vers des dispositifs d'alimentation différenciés (10a, 10b).

11. Dispositif de ventilation selon l'une quelconque des revendications précédentes, caractérisé en ce qu'un moyen optique (47-50) est prévu pour afficher les positions des éléments commandés (13, 14, 16).

12. Dispositif de ventilation selon la revendication 11, caractérisé en ce que ledit moyen optique (47-50) comporte des indicateurs lumineux (47) pour afficher la condition des clefs de sélection, et des bandes de sources lumineuses (48-50) allumées de façon séquentielle pour afficher les positions des éléments commandés (13, 14, 16).

## Ansprüche

1. Lüftungsvorrichtung für Kraftfahrzeuge, umfassend Lüftungsmittel (10a, 10b) mit Drosselvorrichtungen des Luftstroms (16) und Steuerungsvorrichtungen für die Richtung des Luftstromes (13,14), **gekennzeichnet durch** elektromechanische Steuerungsvorrichtungen (20-24, 26-31), die die Drosselvorrichtungen (16) des Luftstroms und die Steuerungsvorrichtungen (13,14) der Richtung des Luftstroms steuert, und eine Reihe von zentralisierten Schaltern (17, 40-46, 60, 61) um wenigstens wahlweise die elektromechanische Steuervorrichtungen (20-24, 26-31) zu betätigen.

2. Lüftungsvorrichtung nach Anspruch 1, wobei die Drosselvorrichtungen des Luftstroms und die Steuerungsteile der Richtung des Luftstroms winklig verschiebbare Flügel (13, 14, 16) umfassen, die wirkungsmäßig mit einer Welle (13a) verbunden sind, **dadurch gekennzeichnet**, daß die elektromechanischen Steuerungsvorrichtungen ein mit der Welle des betreffenden zu steuernden Flügels (13,14,16) verkeiltes Zahnrad (23) umfassen und ein Paar diametral entgegengesetzter Klinkenvorrichtungen (26,27), die mit Zahnrad (23) zusammenarbeiten, wobei jede dieser Klinkenvorrichtungen mit einem entsprechenden Steuerelektromagnet (30,31) verbunden ist, der bei wahlweiser Erregung durch einen entsprechenden zentralisierten Schalter (17) das Zahnrad (23) stufenweise in entgegengesetzte Richtungen dreht.

3. Lüftungsvorrichtung nach den vorstehenden Ansprüchen, **dadurch gekennzeichnet**, daß die zentralisierte Schaltergruppe (17) Umschaltkippschalter (40-42) zum Steuern der elektromechanischen Teile (20-24, 26-31) umfaßt und eine Reihe von Tasten zum Steuern entsprechender bistabiler Schalter (43-46) und zum Wählen der verschiedenen einzustellenden Zuführvorrichtungen (10a, 10b).

4. Lüftungsvorrichtung nach Anspruch 1 bis 3, **dadurch gekennzeichnet**, daß jeder Umschaltkippschalter (40-42) einen Impulsgenerator aktiviert, der entsprechend impulsweise den Steuerelektromagneten (30,31) erregt, der vom Umschalter (40-42) selbst gewählt wird.

5. Lüftungsvorrichtung nach Anspruch 1, **dadurch gekennzeichnet,** daß die elektromechanischen Steuervorrichtungen (20-24, 26-31) von kontinuierlichem Typ sind und einen Motor mit umkehrbarer Polarität besitzt und ein Reduktionsgetriebe zum Antrieb des auf der Welle (13a) des zu steuernden Teils (13, 14,16) verkeilten Zahnrades.

6. Lüftungsvorrichtung nach Anspruch 1, 2 oder 5, **dadurch gekennzeichnet**, daß die elektromechanischen Steuervorrichtungen (20-24, 26-31) auf einen Bolzen einwirken, der mit einem Flügel (13,14) verbunden ist, der ständig eine Bewegung auf andere Flügel (13,14) überträgt, und zwar durch eine gegenseitige Verbindungsstange (15).

7. Lüftungsvorrichtung nach den vorstehenden Ansprüchen, **dadurch gekennzeichnet**, daß die zentralisierte Schaltergruppe (17) drei Umschaltkippschalter (40-42) umfaßt, von denen jeder in entgegengesetzter Richtung entsprechende elektromagnetische Steuervorrichtungen (30, 31) steuert, um das Drosselventil (16) und entsprechend die vertikalen und horizontalen Leitflügel (13,14) zu steuern.

8. Lüftungsvorrichtung nach Anspruch 1 bis 5, **dadurch gekennzeichnet**, daß die zentralisierte Schaltergruppe (17) einen zentralen Umschaltkippschalter (41) umfaßt, der von Paaren von Umschaltern (60,61) zur vertikalen bzw. horizontalen Oszillation flankiert ist für die Steuerung der Flußrichtung dementsprechend vertikal oder horizontal.

9. Lüftungsvorrichtung nach Anspruch 8, **dadurch gekennzeichnet**, daß horizontale und vertikale Kippschalter (60, 61) kleine Rahmen (70a, 70b) umfassen, die um gegenseitig rechtwinklige Bolzen (71,72) oszillieren können und wobei der kleine Rahmen (70a, 70b) des horizontalen Umschalters einen zentralen Sitz (74) mit einem Drehzapfen (75) für den zentralen Umschalter (41) umfaßt.

10. Lüftungsvorrichtung nach den vorstehenden Ansprüchen, **dadurch gekennzeichnet**, daß die zentralisierte Schaltergruppe (17, 40-46, 60,61) über die Wahltasten zu verschiedenen Zufuhrvorrichtungen (10a,10b) umgeschaltet werden kann.

11. Lüftungsvorrichtung nach einem der vorstehenden Ansprüche, **dadurch gekennzeichnet**, daß optische Vorrichtungen (47-50) vorgesehen sind, die die Positionen der gesteuerten Teile (13,14,16) anzeigen.

12. Lüftungsvorrichtung nach Anspruch 11, **dadurch gekennzeichnet,** daß die optischen Vorrichtungen (47-50) Lichtanzeiger (47) zum Anzeigen des Zustandes der Wahltasten und Quellen für Lichtstreifen (48-50)um-fassen, die nacheinander eingeschaltet werden, um die Stellungen der gesteuerten Teile (13,14,16) anzuzeigen.

Fig. 1

Fig. 2

# Fig. 3

# Fig. 4

# Fig. 5